# EUROPEAN PATENT APPLICATION

(11) **EP 4 366 014 A1**
(43) Date of publication of application: **08.05.2024**
(21) Application number: 22832684.9
(22) Date of filing: 31.05.2022
(51) Int. Cl.: H01M 10/052, H01M 4/505, H01M 4/525, H01M 10/0567

(54) **NONAQUEOUS ELECTROLYTE SECONDARY BATTERY**

(30) Priority: 30.06.2021 JP 2021109544
(71) Applicant: Panasonic Intellectual Property Management Co., Ltd., Osaka-shi, Osaka 571-0057 (JP)
(72) Inventor: ZHONG Yuanlong, Kadoma-shi, Osaka 571-0057 (JP); WATARIGAWA Shohei, Kadoma-shi, Osaka 571-0057 (JP)
(74) Representative: Novagraaf International SA
(86) International application number: PCT/JP2022/022080
(87) International publication number: WO 2023/276526

(57) **Abstract**

A nonaqueous electrolyte secondary battery includes a positive electrode, a negative electrode, and a nonaqueous electrolyte. The positive electrode includes a positive electrode active material, the positive electrode active material includes a lithium-transition metal composite oxide containing Ni, Mn, and Al, and the proportions of Ni, Mn, and Al in metal elements other than Li contained in the lithium-transition metal composite oxide are, respectively, Ni: 50 atm% or more, Mn: 10 atm% or less, and Al: 10 atm% or less. When the lithium-transition metal composite oxide contains Co, the proportion of Co in the metal elements other than Li is 1.5 atm% or less. The nonaqueous electrolyte includes an organophosphorus compound represented by a general formula (1). In the general formula (1), R¹ and R² are each independently an alkyl group with 1 to 4 carbon atoms, and R³ is a fluorinated alkyl group with 1 to 4 carbon atoms.

## Description

### [Technical Field]

The present disclosure relates to a nonaqueous electrolyte secondary battery.

### [Background Art]

A nonaqueous electrolyte secondary battery represented by a lithium ion secondary battery includes a positive electrode, a negative electrode, and a nonaqueous electrolyte. In order to ensure excellent characteristics of the nonaqueous electrolyte secondary battery, attempts have been made to improve the components of the battery.

Patent Literature 1 proposes a nonaqueous liquid electrolyte containing: a compound (A) having an organic group with 1 to 20 carbon atoms which may have a substituent on the nitrogen atom of isocyanuric acid; and a nitrile compound, an isocyanate compound, a difluorophosphate compound, a fluorosulfonic acid salt, or the like.

Patent Literature 2 proposes a positive electrode active material for a nonaqueous liquid electrolyte secondary battery, comprising a lithium-containing composite oxide represented by a formula 1: LiₓNi_{1-y-z-v-w}Co_{y}Al_{z}MlᵥM2_{w}O₂. The element M1 in the formula 1 is at least one selected from the group consisting of Mn, Ti, Y, Nb, Mo, and W. The element M2 is at least two selected from the group consisting of Mg, Ca, Sr, and Ba, and the element M2 includes at least Mg and Ca. The formula 1 satisfies 0.97 ≤ x ≤ 1.1, 0.05 ≤ y ≤ 0.35, 0.005 ≤ z ≤ 0.1, 0.0001 ≤ v ≤ 0.05, and 0.0001 ≤ w ≤ 0.05. The composite oxide comprises secondary particles formed by aggregation of primary particles. The average particle diameter of the primary particles of the composite oxide is 0.1 µm or more and 3 µm or less, and the average particle diameter of the secondary particles of the composite oxide is 8 µm or more and 20 µm or less.

### [Citation List]

### [Patent Literature]

Patent Literature 1: Japanese Laid-Open Patent Publication No. 2014-194930
Patent Literature 2: Japanese Laid-Open Patent Publication No. 2006-310181

### [Summary of Invention]

### [Technical Problem]

Co, which is used in the lithium-transition metal composite oxide, has seen price hike in recent years. Reducing the Co content in the lithium-transition metal composite oxide is advantageous in terms of costs, but this leads to deterioration in the cycle characteristics of the nonaqueous electrolyte secondary battery. This is presumably because the lattice structure of the lithium-transition metal composite oxide becomes unstable, and the deterioration is accelerated by side reactions.

### [Solution to Problem]

One aspect of the present disclosure relates a nonaqueous electrolyte secondary battery, including: a positive electrode; a negative electrode; and a nonaqueous electrolyte, wherein
the positive electrode includes a positive electrode active material, the positive electrode active material includes a lithium-transition metal composite oxide containing Ni, Mn, and Al, proportions of Ni, Mn, and Al in metal elements other than Li contained in the lithium-transition metal composite oxide are, respectively, Ni: 50 atm% or more, Mn: 10 atm% or less, and Al: 10 atm% or less, when the lithium-transition metal composite oxide contains Co, a proportion of Co in the metal elements other than Li is 1.5 atm% or less, and the nonaqueous electrolyte includes an organophosphorus compound represented by a general formula (1): 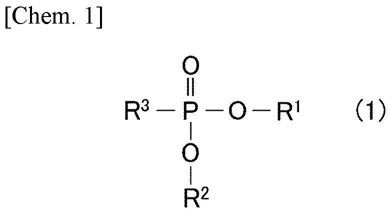
where in the general formula (1), R¹ and R² are each independently an alkyl group with 1 to 4 carbon atoms, and R³ is a fluorinated alkyl group with 1 to 4 carbon atoms.

### [Advantageous Effects of Invention]

According to the present disclosure, it is possible to provide a nonaqueous electrolyte secondary battery excellent in cycle characteristics, even when a lithium-transition metal composite oxide containing no Co or a lithium-transition metal composite oxide with low Co content is used.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

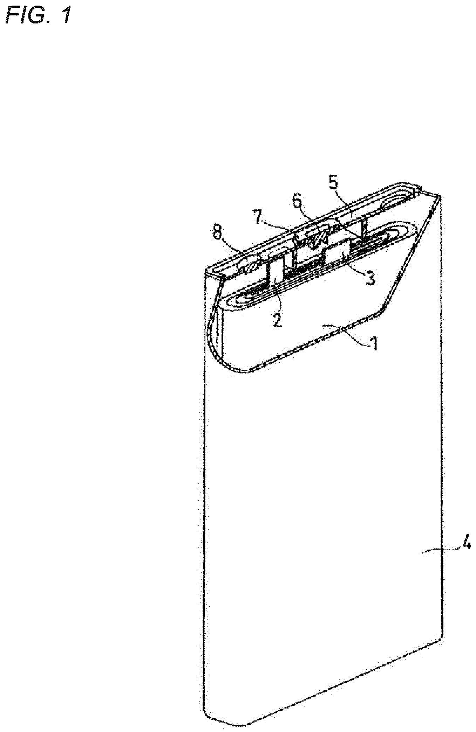

[FIG. 1] A partially cut-away schematic oblique view of a nonaqueous electrolyte secondary battery according to one embodiment of the present disclosure.

### [Description of Embodiments]

Embodiments of a nonaqueous electrolyte secondary battery according to the present disclosure will be described below by way of examples, but the present disclosure is not limited to the examples described below. In the following description, specific numerical values and materials are exemplified in some cases, but other numerical values and other materials may be applied as long as the effects of the present disclosure can be obtained. In the present specification, the phrase "a numerical value A to a numerical value B" means to include the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit does not exceed the upper limit. When a plurality of materials are mentioned as examples, one kind of them may be selected and used singly, or two or more kinds of them may be used in combination.

The present disclosure encompasses a combination of matters recited in any two or more claims selected from plural claims in the appended claims. In other words, as long as no technical contradiction arises, matters recited in any two or more claims selected from plural claims in the appended claims can be combined.

Nonaqueous electrolyte secondary batteries include at least lithium ion batteries, lithium metal secondary batteries, and the like.

A nonaqueous electrolyte secondary battery according to the present disclosure includes a positive electrode, a negative electrode, and a nonaqueous electrolyte. The positive electrode includes a positive electrode active material. The positive electrode active material includes a lithium-transition metal composite oxide containing Ni, Mn, and Al.

If the Co content can be reduced and the Ni content can be increased in the lithium-containing composite oxide, this is advantageous in terms of costs and can ensure a high capacity. In light of this, in the nonaqueous electrolyte secondary battery according to the present disclosure, the Ni content in the lithium-transition metal composite oxide is set high. On the other hand, in the nonaqueous electrolyte secondary battery according to the present disclosure, the lithium-transition metal composite oxide contains no Co, or the proportion of Co in the metal elements other than Li is regulated to 1.5 atm% or less. Hereinafter, the lithium-transition metal composite oxide in the nonaqueous electrolyte secondary battery according to the present disclosure is sometimes referred to as a "composite oxide NMA."

The proportions of Ni, Mn, and Al in the metal elements other than Li contained in the composite oxide NMA are, respectively, Ni: 50 atm% or more, Mn: 10 atm% or less, and Al: 10 atm% or less, and the composite oxide NMA contains no Co, or the proportion of Co in the metal elements other than Li is 1.5 atm% or less.

Mn and Al contribute to stabilizing the crystal structure of the composite oxide NMA with reduced Co content. However, in the composite oxide NMA, since the Co content is regulated to as low as 1.5 atm% or less, and the Ni content is high, the crystal structure tends to be unstable, and metals such as Al and Ni can leach out of the composite oxide NMA. When leaching of metals occurs, the positive electrode capacity decreases, and the cycle characteristics (or capacity retention rate) deteriorate. Especially, in the composite oxide NMA with high Ni content, the leached Ni may form an oxide film having a structure that inhibits the absorption and release of Li ions, on the particle surfaces of the composite oxide NMA, which may cause an increase in internal resistance. In addition, at the positive electrode containing the composite oxide NMA, the nonaqueous electrolyte is apt to be oxidatively decomposed. This leads to deterioration in cycle characteristics (or capacity retention rate), and thus to an increased resistance.

In view of the above, the nonaqueous electrolyte secondary battery according to the present disclosure uses a composite oxide NMA, in combination with a nonaqueous electrolyte including an organophosphorus compound (hereinafter sometimes referred to as a compound A) represented by the following general formula (1).

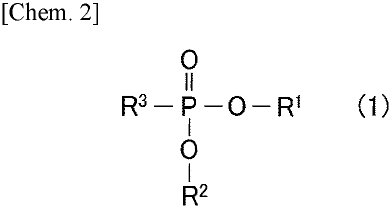

In the general formula (1), R¹ and R² are each independently an alkyl group with 1 to 4 carbon atoms. In the general formula (1), R³ is a fluorinated alkyl group with 1 to 4 carbon atoms.

When the nonaqueous electrolyte contains the compound A, the oxidation resistance of the nonaqueous electrolyte is improved, and a surface film with good quality derived from the compound A is formed on the surfaces of the positive electrode active material particles. The surface film has excellent ionic conductivity and stability, and serves to suppress the deterioration of the positive electrode active material (leaching of metals out of the positive electrode active material) due to contact between the positive electrode active material and the nonaqueous electrolyte. Presumably as a result, the deterioration in cycle characteristics associated with the deterioration of the positive electrode active material is suppressed.

It is noted that even though the compound A is combined with a lithium-transition metal composite oxide having a higher Co content than the composite oxide NMA, the effect of improving the cycle characteristics and the effect of suppressing the increase in internal resistance cannot be remarkably obtained. When combined with the composite oxide NMA, the compound A can exert the above effects remarkably. The effect becoming remarkable with the composite oxide NMA is presumably because, in the composite oxide NMA, as compared to in the lithium-transition metal composite oxide having a higher Co content than the composite oxide NMA, the resistance of the composite oxide itself is high, and its particles are relatively brittle. The particles of the composite oxide NMA are prone to crack, and leaching of metals tends to be significant, and the increase in resistance associated with charge and discharge tends to be apparent. Therefore, with the composite oxide NMA, the breadth of improvement in characteristics by the surface film derived from the compound A widens. On the other hand, the lithium-transition metal composite oxide with high Co content is superior in such an aspect, and the necessity of using the compound A is low.

### (Organophosphorus compound)

In the general formula (1), R¹ and R² are each independently an alkyl group with 1 to 4 carbon atoms. The alkyl group with 1 to 4 carbon atoms may be linear or branched. Examples of the alkyl group with 1 to 4 carbon atoms include methyl, ethyl, n-propyl, isopropyl, n-butyl, sec-butyl, and tert-butyl groups. Preferred among them are methyl and ethyl groups.

If at least one of R¹ and R² is a fluorinated alkyl group with 1 to 4 carbon atoms, the solubility of a reaction product derived from the organophosphorus compound tends to increase, and the ability to form a surface film tends to decrease.

In the general formula (1), R³ is a fluorinated alkyl group with 1 to 4 carbon atoms. The fluorinated alkyl group means a group in which at least one of the hydrogen atoms of an alkyl group is substituted by a fluorine atom. In the fluorinated alkyl group with 1 to 4 carbon atoms, the remaining hydrogen atom(s) not substituted by a fluorine atom may be substituted by a halogen atom other than fluorine (e.g., chlorine, bromine). The fluorinated alkyl group may be linear or branched.

It is presumed that at least one of the hydrogen atoms in the alkyl group being substituted by a fluorine atom and R³ being directly bound to the phosphorus atom have influence on the ionic conductivity and the stability of the surface film.

If R³ is an alkyl group with 1 to 4 carbon atoms containing no fluorine atom, the surface film derived from the organophosphorus compound could hardly be present stably. Moreover, even though R³ is a fluorinated alkyl group having 1 to 4 carbon atoms, if it is bound to a phosphorus atom via an oxygen atom, the resistance of the surface film tends to increase.

Examples of the fluorinated alkyl group with 1 to 4 carbon atoms include fluoromethyl, difluoromethyl, trifluoromethyl, 2-fluoroethyl, 2,2-difluoroethyl, 2,2,2-trifluoroethyl, 2-fluoropropyl, 3-fluoropropyl, 2,2-difluoropropyl, 3,3-difluoropropyl, 3,3,3-trifluoropropyl, 2-fluorobutyl, 3-fluorobutyl, 4-fluorobutyl, 2,2-difluorobutyl, 3,3-difluorobutyl, 4,4-difluorobutyl, and 4,4,4-trifluorobutyl groups. Preferred among them are fluoromethyl, difluoromethyl, and trifluoromethyl groups.

As a specific example of the compound A, at least one selected from the group consisting of diethyl(fluoromethyl)phosphonate, diethyl(difluoromethyl)phosphonate, and diethyl(trifluoromethyl)phosphonate is preferred. Among them, diethyl(difluoromethyl)phosphonate is more preferred. The compound A may be used singly or in combination of two or more kinds.

### (Fluorinated cyclic carbonate)

The nonaqueous electrolyte may further contain a fluorinated cyclic carbonate. The fluorinated cyclic carbonate means a compound in which at least one hydrogen atom of the cyclic carbonate is substituted by a fluorine atom. When the compound A and the fluorinated cyclic carbonate are used in combination, a surface film derived from the combination of the compound A and the fluorinated cyclic carbonate is formed, and the ionic conductivity of the surface film is further enhanced. As a result, more excellent cycle characteristics can be ensured, and the increase in internal resistance is further suppressed. Especially when a later-described NMA composite oxide is used as the positive electrode active material, the effect of using in combination the compound A and the fluorinated cyclic carbonate can be remarkably obtained. However, with the fluorinated cyclic carbonate alone, it is disadvantageous in terms of the ionic conductivity of the surface film.

When the fluorinated cyclic carbonate (e.g., FEC) is added to the nonaqueous electrolyte, the amount of gas generated during high-temperature storage of the battery in a charged state tends to increase, but on the other hand, when the fluorinated cyclic carbonate is added together with the compound A to the nonaqueous electrolyte, gas generation is considerably suppressed.

The fluorinated cyclic carbonate includes, for example, a compound represented by the following general formula (2).

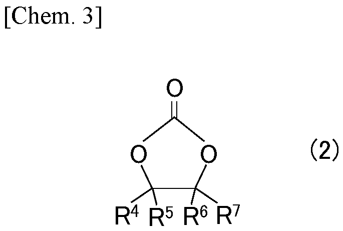

In the general formula (2), R⁴ to R⁷ are each independently a hydrogen atom or a methyl group, and at least one of the above hydrogen atom and the hydrogen atoms of the above methyl group is substituted by a fluorine atom. The remaining hydrogen atom(s) not substituted by a fluorine atom may be substituted by a halogen atom other than fluorine (e.g., chlorine, bromine).

Specific examples of the fluorinated cyclic carbonate include fluoroethylene carbonate (FEC), 1,2-difluoroethylene carbonate, 1,1-difluoroethylene carbonate, 1-fluoropropylene carbonate, 3,3,3-trifluoropropylene carbonate, and 2,3-difluoro-2,3-butylene carbonate. Preferred among them is FEC, in terms of reducing the surface film resistance. The fluorinated cyclic carbonate may be used singly or in combination of two or more.

In the following, the nonaqueous electrolyte secondary battery according to the present disclosure will be specifically described for each component.

### [Positive electrode]

The positive electrode includes a positive electrode active material. The positive electrode usually includes a positive electrode current collector, and a layer of a positive electrode mixture (hereinafter, a positive electrode mixture layer) held on the positive electrode current collector. The positive electrode mixture layer can be formed by applying a positive electrode slurry prepared by dispersing constituent components of the positive electrode mixture in a dispersion medium, onto a surface of the positive electrode current collector, followed by drying. The applied film after drying may be rolled as necessary.

The positive electrode mixture contains a positive electrode active material as an essential component, and may contain a binder, a thickener, a conductive agent, and the like as optional components.

### (Positive electrode active material)

The positive electrode active material contains a composite oxide NMA. The composite oxide NMA contains Ni, Mn, and Al, and may contain a small amount of Co, or may contain no Co. In view of the reduction in production costs, the Co content is desirably as small as possible. The content of Co in the metal elements other than Li is 1.5 atm% or less, desirably 1.0 atm% or less, more desirably 0.5 atm% or less, and most desirably, no Co is contained. On the other hand, in view of increasing the capacity, in the composite oxide NMA, the proportions of Ni, Mn, and Al in the metal elements other than Li are Ni: 50 atm% or more, Mn: 10 atm% or less, and Al: 10 atm% or less. The Ni content in the metal elements other than Li is desirably 80 atm% or more, more desirably 90 atm% or more, and may be 92 atm% or more. The Mn content may be 7 atm% or less, may be 5 atm% or less, and may be 3 atm% or less. The Al content may be 9 atm% or less, may be 7 atm% or less, and may be 5 atm% or less. The composite oxide NMA has, for example, a layered crystal structure (e.g., rock-salt type crystal structure).

The composite oxide NMA is, for example, represented by a formula: Li_{α}Ni_{(1-x1-x2-y-z)}Coₓ₁Mnₓ₂Al_{y}M_{z}O_{2+β}. The element M is other than Li, Ni, Mn, Al, Co, and oxygen.

In the above formula, the α representing the atomic ratio of lithium is, for example, 0.95 ≤ α ≤ 1.05. The α increases and decreases during charge and discharge. In the (2+β) representing the atomic ratio of oxygen, β satisfies -0.05 ≤ β ≤ 0.05.

The 1-x1-x2-y-z (= v) representing the atomic ratio of Ni, is, for example, 0.685 or more, may be 0.8 or more, may be 0.90 or more, and may be 0.92 or more. The v representing the atomic ratio of Ni may be 0.95 or less. The v may be 0.685 or more and 0.95 or less (0.685 ≤ v ≤ 0.95), may be 0.80 or more and 0.95 or less, may be 0.90 or more and 0.95 or less, and may be 0.92 or more and 0.95 or less.

The higher the atomic ratio v of Ni is, the more the lithium ions can be extracted from the composite oxide NMA during charge, and the capacity can be increased. However, Ni in the composite oxide NMA whose capacity has been increased as above has a tendency to have a higher valence. Also, when the atomic ratio of Ni is set high, the atomic ratios of other elements become relatively small. In this case, the crystal structure tends to become unstable especially in a fully charged state, and metals (Ni etc.) tend to leach out therefrom, and the crystal structure changes to one into and from which lithium ions are difficult to be absorbed and released reversibly during repeated charge and discharge, and thus tends to be inactivated. As a result, the cycle characteristics tend to deteriorate. Therefore, when the composite oxide NMA with high Ni content is used, the cycle characteristics improvement effect by the addition of the compound A to the nonaqueous electrolyte can be remarkably obtained.

The x1 representing the atomic ratio of Co is, for example, 0.015 or less (0 ≤ x1 ≤ 0.015), may be 0.01 or less, and may be 0.005 or less. When the x1 is 0, this encompasses a case where Co is below the detection limit.

The x2 representing the atomic ratio of Mn is, for example, 0.1 or less (0 < x2 ≤ 0.1), may be 0.07 or less, may be 0.05 or less, and may be 0.03 or less. The x2 may be 0.01 or more, and may be 0.02 or more. Mn contributes to stabilizing the crystal structure of the composite oxide NMA, and containing Mn, which is inexpensive, in the composite oxide NMA is advantageous for cost reduction.

The y representing the atomic ratio of Al is, for example, 0.1 or less (0 < y ≤ 0.1), may be 0.09 or less, may be 0.07 or less, and may be 0.05 or less. The y may be 0.01 or more, and may be 0.02 or more. Al contributes to stabilizing the crystal structure of the composite oxide NMA. Preferably, 0.05 ≤ x2+y ≤ 0.1. In this case, the effect of the compound A and the effect of suppressing the increase in internal resistance after repeated charge and discharge become more remarkable.

The z representing the atomic ratio of the element M is, for example, 0 ≤ z ≤ 0.10, may be 0 < z ≤ 0.05, and may be 0.001 ≤ z ≤ 0.005.

The element M may be at least one selected from the group consisting of Ti, Zr, Nb, Mo, W, Fe, Zn, B, Si, Mg, Ca, Sr, Sc, and Y In particular, when at least one selected from the group consisting of Nb, Sr, and Ca is contained in the composite oxide MNA, the surface structure of the composite oxide NMA can be stabilized, the resistance can be reduced, and the leaching of metals can be further suppressed. It is more effective when the element M is localized near the particle surfaces of the composite oxide NMA.

The contents of the elements constituting the composite oxide NMA can be measured using an inductively coupled plasma atomic emission spectroscopy (ICP-AES), an electron probe microanalyzer (EPMA), an energy dispersive X-ray spectroscopy (EDX), or the like.

The composite oxide NMA is, for example, secondary particles formed by aggregation of primary particles. The particle diameter of the primary particles is typically 0.05 µm or more and 1 µm or less. The average particle diameter of the secondary particles of the composite oxide is, for example, 3 µm or more and 30 µm or less, and may be 5 µm or more and 25 µm or less.

In the present specification, the average particle diameter of the secondary particles means a particle diameter at 50% cumulative volume (volume average particle diameter) in a particle size distribution measured by a laser diffraction and scattering method. Such a particle diameter is sometimes referred to as D50. As the measuring apparatus, for example, "LA-750", available from Horiba, Ltd. (HORIBA) can be used.

The composite oxide NMA can be obtained by, for example, the following procedures. First, to a solution of a salt containing metal elements constituting the composite oxide NMA, under stirring, a solution containing an alkali, such as sodium hydroxide, is added dropwise, to adjust the pH to the alkali side (e.g., 8.5 to 12.5), thereby to precipitate a composite hydroxide containing metal elements (Ni, Mn, Al, Co as necessary, and an element M as necessary). Subsequently, the composite hydroxide is baked, to obtain a composite oxide (hereinafter sometimes referred to as a "raw material composite oxide") containing the metal elements. The baking temperature at this time is not particularly limited, but is, for example, 300 °C to 600 °C.

Next, the raw material composite oxide is mixed with a lithium compound and a compound containing the element M as necessary, and the mixture is baked under an oxygen gas flow. Thus, a composite oxide NMA can be obtained. The baking temperature at this time is not particularly limited, but is, for example, 450 °C or higher and 800 °C or lower. Each baking may be performed in a single stage, or in multiple stages, or while raising the temperature.

As the lithium compound, lithium oxide, lithium hydroxide, lithium carbonate, and the like may be used. In mixing the raw material composite oxide and the lithium compound, by mixing a compound containing the element M, the element M can be localized near the particle surfaces of the composite oxide NMA.

The positive electrode active material can contain a lithium-transition metal composite oxide other than the composite oxide NMA, but preferably, the composite oxide NMA is contained in high proportion. The proportion of the composite oxide NMA in the positive electrode active material is, for example, 90 mass% or more, and may be 95 mass% or more. The proportion of the composite oxide in the positive electrode active material is 100 mass% or less.

### (Others)

As the binder, for example, a resin material is used. Examples of the binder include fluorocarbon resins, polyolefin resins, polyamide resins, polyimide resins, acrylic resins, vinyl resins, and rubbery materials (e.g., styrene-butadiene copolymer (SBR)). The binder may be used singly or in combination of two or more kinds.

As the thickener, for example, cellulose derivatives, such as cellulose ethers, are exemplified. Examples of the cellulose derivatives include carboxymethyl cellulose (CMC) and modified products thereof, and methyl cellulose. The thickener may be used singly or in combination of two or more kinds.

As the conductive agent, for example, conductive fibers, and conductive particles are exemplified. Examples of the conductive fibers include carbon fibers, carbon nanotubes, and metal fibers. Examples of the conductive particles include conductive carbon (carbon black, graphite, etc.) and metal powder. The conductive agent may be used singly or in combination of two or more kinds.

As the dispersion medium used in the positive electrode slurry, although not particularly limited, for example, water, an alcohol, N-methyl-2-pyrrolidone (NMP), and mixed solvents thereof can be used.

As the positive electrode current collector, for example, a metal foil can be used. The positive electrode current collector may be porous. Examples of the porous current collector include a net, a punched sheet, and an expanded metal. The material of the positive electrode current collector may be, for example, stainless steel, aluminum, an aluminum alloy, and titanium. The thickness of the positive electrode current collector is not particularly limited, but is, for example, 1 to 50 µm, and may be 5 to 30 µm.

### [Negative electrode]

The negative electrode includes a negative electrode active material. The negative electrode usually includes a negative electrode current collector, and a layer of a negative electrode mixture (hereinafter, a negative electrode mixture layer) held on the negative electrode current collector. The negative electrode mixture layer can be formed by applying a negative electrode slurry prepared by dispersing constituent components of the negative electrode mixture in a dispersion medium, onto a surface of the negative electrode current collector, followed by drying. The applied film after drying may be rolled as necessary.

The negative electrode mixture contains a negative electrode active material as an essential component, and may contain a binder, a thickener, a conductive agent, and the like as optional components.

### (Negative electrode active material)

As the negative electrode active material, metal lithium, a lithium alloy, and the like may be used, but a material capable of electrochemically absorbing and releasing lithium ions is preferably used. Such a material includes a carbonaceous material and a Si-containing material. The negative electrode may contain these negative electrode active materials singly or in combination of two or more kinds.

Examples of the carbonaceous material include graphite, graphitizable carbon (soft carbon), and non-graphitizable carbon (hard carbon). The carbonaceous material may be used singly or in combination of two or more kinds.

In particular, in terms of its excellent stability during charge and discharge and its low irreversible capacity, graphite is preferred as the carbonaceous material. Examples of the graphite include natural graphite, artificial graphite, and graphitized mesophase carbon particles.

Examples of the Si-containing material include elementary Si, a silicon alloy, and a silicon compound (silicon oxide etc.), and a composite material including a lithium-ion conductive phase (matrix) and a silicon phase dispersed therein. The silicon oxide is exemplified by SiOx particles. The x may be, for example, 0.5 ≤ x < 2, and may be 0.8 ≤ x ≤ 1.6. The lithium-ion conductive phase can be at least one selected from the group consisting of a SiO₂ phase, a silicate phase, and a carbon phase.

### (Others)

As the binder, the thickener, and the conductive agent, and the dispersion medium used in the negative electrode slurry, for example, the materials exemplified for the positive electrode can be used.

As the negative electrode current collector, for example, a metal foil can be used. The negative electrode current collector may be porous. The material of the negative electrode current collector may be, for example, stainless steel, nickel, a nickel alloy, copper, and a copper alloy. The thickness of the negative electrode current collector is not particularly limited, but is, for example, 1 to 50 µm, and may be 5 to 30 µm.

### [Nonaqueous electrolyte]

The nonaqueous electrolyte usually contains a nonaqueous solvent, a lithium salt, and an additive.

The nonaqueous electrolyte contains, as the additive, the above-described compound A. The content of the compound A in the nonaqueous electrolyte may be 2 mass% or less, may be 1.5 mass% or less, may be 1 mass% or less, and may be 0.5 mass% or less. When the content of the compound A is in such a range, excessive film formation on the positive electrode surface is suppressed, and the effect of suppressing the increase in internal resistance when charge and discharge are repeated can be enhanced. In the nonaqueous electrolyte secondary battery, the content of the compound A in the nonaqueous electrolyte changes during storage or during charge and discharge. It suffices therefore that the compound A remains at a concentration equal to or above the detection limit, in the nonaqueous electrolyte collected from the nonaqueous electrolyte secondary battery. The content of the compound A in the nonaqueous electrolyte may be 0.01 mass% or more.

The content of the compound A in the nonaqueous electrolyte used for producing a nonaqueous electrolyte secondary battery may be 0.01 mass% or more, and may be 0.1 mass% or more, or 0.3 mass% or more. The content of the compound A in the nonaqueous electrolyte used for producing a nonaqueous electrolyte secondary battery is, for example, 1.5 mass% or less, and may be 1 mass% or less, or 0.5 mass% or less. These lower and upper limits can be combined in any combination.

The nonaqueous electrolyte may further contain, as the additive, the above-described fluorinated cyclic carbonate. The content of the fluorinated cyclic carbonate in the nonaqueous electrolyte is preferably 1.5 mass% or less, and may be 1 mass% or less or 0.5 mass% or less. When the content of the fluorinated cyclic carbonate is in such a range, excessive film formation on the positive electrode surface is suppressed, and the effect of suppressing the increase in internal resistance when charge and discharge are repeated can be enhanced. In the nonaqueous electrolyte secondary battery, the content of the fluorinated cyclic carbonate in the nonaqueous electrolyte changes during storage or during charge and discharge. It suffices therefore that the fluorinated cyclic carbonate remains at a concentration equal to or above the detection limit, in the nonaqueous electrolyte collected from the nonaqueous electrolyte secondary battery. The content of the fluorinated cyclic carbonate in the nonaqueous electrolyte may be 0.01 mass% or more.

The content of the fluorinated cyclic carbonate in the nonaqueous electrolyte used for producing a nonaqueous electrolyte secondary battery may be 0.01 mass% or more, 0.1 mass% or more, or 0.3 mass% or more. The content of the fluorinated cyclic carbonate in the nonaqueous electrolyte used for producing a nonaqueous electrolyte secondary battery is, for example, 1.5 mass% or less, and may be 1 mass% or less, or 0.5 mass% or less. These lower and upper limits can be combined in any combination.

The contents of the compound A and the fluorinated cyclic carbonate in the nonaqueous electrolyte can be determined, for example, using gas chromatography under the following conditions.
Instrument used: GC-2010 Plus, available from Shimadzu Corporation
Column: HP-1 (membrane thickness 1 µm, inner diameter 0.32 mm, length 60 m), available from J&W Corporation
Column temperature: raised from 50 °C to 90 °C at a temperature rise rate of 5 °C/min and held at 90 °C for 15 minutes, and then, raised from 90 °C to 250 °C at a temperature rise rate of 10 °C/min and held at 250 °C for 15 minutes
Split ratio: 1/50
Linear velocity: 30.0 cm/sec
Inlet temperature: 270 °C
Injection amount: 1 µL
Detector: FID 290 °C (sens. 101)

In the nonaqueous electrolyte, the mass ratio of the fluorinated cyclic carbonate to the compound A (= fluorinated cyclic carbonate / compound A) is, for example, preferably 0.5 to 1.5, and may be 0.8 to 1.2. When the mass ratio between the two components is in such a range, the composition of the film formed on the particle surfaces of the composite oxide NMA is well balanced. In other words, a surface film having excellent ionic conductivity and being highly effective in suppressing the leaching of metals and in suppressing the increase in internal resistance when charge and discharge are repeated is formed.

### (Nonaqueous solvent)

Examples of the nonaqueous solvent include cyclic carbonic acid esters, chain carbonic acid esters, cyclic carboxylic acid esters, and chain carboxylic acid esters. The cyclic carbonic acid esters are exemplified by propylene carbonate (PC) and ethylene carbonate (EC). The chain carbonic acid esters are exemplified by diethyl carbonate (DEC), ethyl methyl carbonate (EMC), and dimethyl carbonate (DMC). The cyclic carboxylic acid esters are exemplified by γ-butyrolactone (GBL), and γ-valerolactone (GVL). The chain carboxylic acid esters are exemplified by methyl formate, ethyl formate, propyl formate, methyl acetate (MA), ethyl acetate, propyl acetate, methyl propionate, ethyl propionate, and propyl propionate. The nonaqueous electrolyte may contain these nonaqueous solvent singly or in combination of two or more kinds.

### (Lithium salt)

Examples of the lithium salt include: LiClO₄, LiBF₄, LiPF₆, LiAlCl₄, LiSbF₆, LiSCN, LiCFsSOs, LiCF₃CO₂, LiAsF₆, LiB₁₀Cl₁₀, lithium lower aliphatic carboxylate, LiCl, LiBr, LiI, borates, and imides. Examples of the borates include lithium bisoxalate borate, lithium difluorooxalate borate, lithium bis(1,2-benzenediolate(2-)-O,O') borate, lithium bis(2,3-naphthalenediolate(2-)-O,O') borate, lithium bis(2,2'-biphenyldiolate(2-)-O,O') borate, and lithium bis(5-fluoro-2-olate-1-benzenesulfonate-O,O') borate. Examples of the imides include lithium bisfluorosulfonyl imide (LiN(FSO₂)₂), lithium bis(trifluoromethanesulfonyl)imide (LiN(CF₃SO₂)₂), lithium trifluoromethanesulfonyl nonafluorobutanesulfonyl imide (LiN(CF₃SO₂)(C₄F₉SO₂)), and lithium bis(pentafluoroethanesulfonyl)imide (LiN(C₂F₅SO₂)₂). The nonaqueous electrolyte may contain these lithium salts singly or in combination of two or more kinds.

The concentration of the lithium salt in the nonaqueous electrolyte is, for example, 0.5 mol/L or more and 2 mol/L or less.

The nonaqueous electrolyte may further contain, as the additive, at least one selected from the group consisting of vinylene carbonate and vinylethylene carbonate.

### [Separator]

It is desirable to interpose a separator between the positive electrode and the negative electrode. The separator is excellent in ion permeability and has moderate mechanical strength and electrically insulating properties. The separator may be, for example, a microporous thin film, a woven fabric, or a nonwoven fabric. As the material of the separator, a polyolefin, such as polypropylene and polyethylene, is preferred.

In an exemplary structure of the nonaqueous electrolyte secondary battery, an electrode group formed by winding the positive electrode and the negative electrode with the separator interposed therebetween is housed together with the nonaqueous electrolyte in an outer body. However, without limited thereto, an electrode group in a different form may be adopted. For example, the electrode group may be of a stacked type formed by stacking the positive electrode and the negative electrode with the separator interposed therebetween. The type of the nonaqueous electrolyte secondary battery is also not particularly limited, and may of a cylindrical, prismatic, coin, button, or laminate type.

In the following, the structure of a prismatic nonaqueous electrolyte secondary battery as an example of the nonaqueous electrolyte secondary battery according to the present disclosure will be described with reference to FIG. 1.

The battery includes a bottomed prismatic battery case 4, and an electrode group 1 and a nonaqueous electrolyte (not shown) housed in the battery case 4. The electrode group 1 has a long negative electrode, a long positive electrode, and a separator interposed between the positive electrode and the negative electrode. A negative electrode current collector of the negative electrode is electrically connected, via a negative electrode lead 3, to a negative electrode terminal 6 provided on a sealing plate 5. The negative electrode terminal 6 is electrically insulated from the sealing plate 5 by a gasket 7 made of resin. A positive electrode current collector of the positive electrode is electrically connected, via a positive electrode lead 2, to the back side of the sealing plate 5. That is, the positive electrode is electrically connected to the battery case 4 serving as a positive electrode terminal. The periphery of the sealing plate 5 is engaged with the opening end of the battery case 4, and the engaging portion is laser-welded. The sealing plate 5 is provided with an injection port for nonaqueous electrolyte, which is closed with a sealing plug 8 after electrolyte injection.

The present disclosure will be more specifically described below with reference to Examples and Comparative Examples, but the present disclosure is not limited to the following Examples.

### [Examples]

### <<Examples 1 to 4 and Comparative Examples 1 to 8>>

A nonaqueous electrolyte secondary battery was fabricated and evaluated in the following procedure.

### (1) Production of positive electrode

To 95 parts by mass of positive electrode active material particles, 2.5 parts by mass of acetylene black, 2.5 parts by mass of polyvinylidene fluoride, and an appropriate amount of NMP were added, and mixed, to obtain a positive electrode slurry. Next, the positive electrode slurry was applied onto a surface of an aluminum foil, and the applied film was dried, and then rolled, to form a positive electrode mixture layer (thickness 95 µm, density 3.6 g/cm³) on both sides of the aluminum foil. A positive electrode was thus obtained.

The positive electrode active material particles were produced by the following procedures.

An aqueous solution was prepared by dissolving nickel sulfate, aluminum sulfate, and, as necessary, cobalt sulfate or manganese sulfate. The concentration of the nickel sulfate in the aqueous solution was set to 1 mol/L, and the concentrations of other sulfates were adjusted such that the relationship of the ratio between Ni and each metal element was as shown in Table 1.

At 50 °C, to the aqueous solution, under stirring, an aqueous solution containing sodium hydroxide at a concentration of 30 mass% was added dropwise until the pH of the mixture reached 12, to precipitate a hydroxide. The hydroxide was collected by filtration, washed with water, and dried. The dry product was baked at 500 °C for 8 hours in a nitrogen atmosphere, to give a composite oxide.

The resultant composite oxide was mixed with lithium hydroxide, so that the atomic ratio between Li and the total of Ni, Co, Mn, and Al was 1:1 by atomic ratio. The mixture was baked, using an electric furnace, by heating from room temperature to 650 °C in an oxygen atmosphere at a temperature raising rate of 2.0 °C/min. This was followed by baking by heating from 650 °C to 750 °C at a temperature raising rate of 0.5 °C/min. The resultant baked product was washed with water, and dried, to give a composite oxide NMA (positive electrode active material particles).

### (2) Production of negative electrode

A silicon composite material and graphite were mixed in a mass ratio of 5:95 and used as a negative electrode active material. The negative electrode active material was mixed with a sodium salt of CMC (CMC-Na), SBR, and water in a predetermined mass ratio, to prepare a negative electrode slurry. Next, the negative electrode slurry was applied onto a surface of a copper foil as a negative electrode current collector, and the applied film was dried, and then rolled, to form a negative electrode mixture layer on both sides of the copper foil.

### (3) Preparation of nonaqueous electrolyte

To a mixed solvent of EC and EMC (EC:EMC = 3:7 (volume ratio)), LiPF₆ and, as necessary, an organophosphorus compound (first component) and FEC (second component) as shown in Table 1 were dissolved, to prepare a nonaqueous electrolyte (liquid electrolyte). The concentration of the LiPF₆ in the liquid electrolyte was set to 1.0 mol/L. The concentrations (initial concentrations) of the first component and the second component in the prepared nonaqueous electrolyte were set to the values (mass%) shown in Table 1.

### (4) Production of nonaqueous electrolyte secondary battery

To the positive electrode obtained above, a positive electrode lead made of Al was attached, and to the negative electrode obtained above, a negative electrode lead made of Ni was attached. In an inert gas atmosphere, the positive electrode and the negative electrode were spirally wound with a polyethylene thin film (separator) interposed therebetween, to fabricate a wound electrode group. The electrode group was housed in a bag-shaped outer body formed of a laminate sheet having an Al layer, and after injection of the nonaqueous electrolyte thereinto, the outer body was sealed, to complete a nonaqueous electrolyte secondary battery. In housing the electrode group in the outer body, part of the positive electrode lead and part of the negative electrode lead were each exposed externally from the outer body. In the Table 1, E1 to E4 are of Examples 1 to 4, and C1 to C8 are of Comparative Examples 1 to 8.

### (5) Evaluation

The nonaqueous electrolyte secondary batteries obtained in Examples and Comparative Examples were each subjected to the following evaluations.

### (a) Initial DC resistance value (DCIR)

In a 25 °C environment, the battery was constant-current charged at a current of 0.3 It until the voltage reached 4.2 V, and then constant-voltage charged at a constant voltage of 4.2 V until the current reached 0.05 It. Subsequently, the battery was discharged at a constant current of 0.3 It for 100 minutes to a state of charge (SOC) of 50%.

The voltage values were measured when the SOC 50% battery was discharged for 10 seconds each at current values of 0 A, 0.1 A, 0.5 A, and 1.0 A. The relationship between the current values of discharge and the voltage values after 10 seconds was linearly approximated by a least squares method, and from the absolute value of a slope of the line, a DCIR (initial DCIR) was calculated.

### (b) Charge-discharge cycle test

In a 25 °C environment, the battery was constant-current charged at a constant current of 0.5 It until the voltage reached 4.2 V, and then, constant-voltage charged at a constant voltage of 4.2 V until the current reached 0.02 It. Subsequently, a constant-current discharge was performed at a constant current of 0.5 It until the voltage reached 3.0 V With this charging and discharging was taken as one cycle, 200 cycles were performed in total.

### (c) DCIR increase rate (ΔDCIR)

Except for using the battery having subjected to 200 cycles of charging and discharging in the charge-discharge cycle test of the above (b), the DCIR (DCIR at 200th cycle) was calculated in the same manner as in the above (a). The ratio of the DCIR after 200 cycles to the initial DCIR was calculated as a DCIR increase rate, from the following equation.

DCIR increase rate (%) = {(DCIR at 200th cycle - initial DCIR) / initial DCIR} × 100

### (d) Capacity retention rate (MR)

In the charge-discharge cycle test of the above (b), the discharge capacity at the 1st cycle and the discharge capacity at the 200th cycle were measured, and the capacity retention rate was determined from the following equation, as an index of the cycle characteristics. Capacity retention rate (%) = (discharge capacity at 200th cycle / discharge capacity at 1st cycle) × 100

### (e) Amount of gas generated during high-temperature storage

Furthermore, the batteries of E1, E2, C3, and C4 were evaluated for their high-temperature storage characteristics as follows.

In a 25 °C environment, the battery was constant-current charged at a constant current of 0.3 It until the voltage reached 4.2 V, and then, constant-voltage charged at a constant voltage of 4.2 V until the current reached 0.02 It. The battery after charging was stored in an 80 °C environment for 72 hours, and the amount of gas generated in the battery during storage was checked.

The evaluation result are shown in Table 1. Regarding the first component in Table 1, A1 is diethyl(difluoromethyl)phosphonate, A2 is diethyl(trifluoromethyl)phosphonate, B1 is diethyl methyl phosphonate, B2 is dimethyl vinyl phosphonate, and B3 is bis(2,2,2-trifluoroethyl) methylphosphonate.

A1 and A2 correspond to the organophosphorus compound represented by the general formula (1), and B1 to B3 do not correspond to the organophosphorus compound represented by the general formula (1).

**[Table 1]**

| battery | LiNiᵥCoₓ₁Mnₓ₂Al_{y}O₂ y = 1-x1-x2-y | | | | first component | | second component | | MR (%) | ΔDCIR (%) | amount of gas generated during high-temperature storage (mL) |
|---|---|---|---|---|---|---|---|---|---|---|---|
| | v | x1 | x2 | y | kind | mass% | kind | mass% | | | |
| E1 | 0.92 | 0 | 0.03 | 0.05 | A1 | 1 | - | 0 | 89.4 | 18.9 | 24.5 |
| E2 | 0.92 | 0 | 0.03 | 0.05 | A1 | 1 | FEC | 1 | 90.3 | 18.0 | 26.4 |
| E3 | 0.92 | 0 | 0.03 | 0.05 | A2 | 1 | - | 0 | 88.8 | 17.8 | - |
| E4 | 0.92 | 0 | 0.03 | 0.05 | A2 | 1 | FEC | 1 | 89.1 | 18.3 | - |
| C1 | 0.82 | 0.15 | 0 | 0.03 | - | 0 | - | 0 | 89.8 | 17.0 | - |
| C2 | 0.91 | 0.04 | 0 | 0.05 | - | 0 | - | 0 | 87.2 | 21.5 | - |
| C3 | 0.92 | 0 | 0.03 | 0.05 | - | 0 | - | 0 | 84.9 | 24.2 | 24.2 |
| C4 | 0.92 | 0 | 0.03 | 0.05 | - | 0 | FEC | 1 | 87.0 | 20.9 | 30.5 |
| C5 | 0.92 | 0 | 0.03 | 0.05 | B1 | 1 | - | 0 | 84.1 | 25.4 | - |
| C6 | 0.92 | 0 | 0.03 | 0.05 | B2 | 1 | - | 0 | 85.2 | 24.1 | - |
| C7 | 0.92 | 0 | 0.03 | 0.05 | B3 | 1 | - | 0 | 83.9 | 25.9 | - |
| C8 | 0.91 | 0.04 | 0 | 0.05 | A1 | 1 | FEC | 1 | 88.6 | 18.2 | - |

In C3 in which the composite oxide NMA containing no Co was used, as compared to in C1 in which the composite oxide containing relatively much Co was used, the MR decreased by 4.9% (89.8% -> 84.9% ), and the ΔDCIR increased by 7.2% (17.0% -> 24.2%).

In C3 in which the composite oxide NMA containing no Co was used, as compared to in C2 in which the composite oxide containing relatively much Co was used, the MR decreased by 2.3% (87.2% -> 84.9% ), and the ΔDCIR increased by 2.7% (21.5% -> 24.2%).

In E1 and C3 in both of which the composite oxide NMA containing no Co was used as the positive electrode active material, A1 was added to the nonaqueous electrolyte in E1, and A1 was not added to the nonaqueous electrolyte in C3. In E1, as compared to in C3, the MR increased by as much as 4.5% (84.9% -> 89.4%), and the ΔDCIR decreased by as much as 5.3% (24.2% -> 18.9%).

On the other hand, in C8 and C2 in both of which the composite oxide containing a relatively much Co was used as the positive electrode active material, A1 was added to the nonaqueous electrolyte in C8, and A1 was not added to the nonaqueous electrolyte in C2. In C8, as compared to in C2, the capacity retention rate (MR) increased by only 1.4% (87.2% -> 88.6%), and the DCIR increase rate (ΔDCIR) decreased by only 3.3% (21.5% -> 18.2%).

In E1 in which the composite oxide NMA containing no Co was used, as compared to in C8 in which the composite oxide containing relatively much Co was used, the effect by the addition of A1 to the nonaqueous electrolyte was remarkably obtained.

In E2 in which A1 and FEC were contained in the nonaqueous electrolyte, as compared to in C3, the MR increased by as much as 5.4% (84.9% -> 90.3%), and the ΔDCIR decreased by as much as 6.2% (24.2% -> 18.0%).

In C4 in which A1 was not contained and FEC was contained in the nonaqueous electrolyte, as compared to in C3, the MR increased by 2.1% (84.9% -> 87.0%), and ΔDCIR decreased by 3.3% (24.2% -> 20.9%).

E2, relative to E1, showed further increase in MR by 0.9% (89.4% -> 90.3%) and further decrease in ΔDCIR by 0.9% (18.9% -> 18.0%). By using a nonaqueous electrolyte containing A1 and FEC, the cycle characteristics improvement effect and the internal resistance reduction effect were more remarkably obtained.

In C4 and C3 in both of which the composite oxide NMA containing no Co was used as the positive electrode active material, FEC was added to the nonaqueous electrolyte in C4, and FEC was not added to the nonaqueous electrolyte in C3. In C4, relative to C3, the amount of gas generated during high-temperature storage increased by as much as 6.3 mL (24.2 mL -> 30.5 mL).

On the other hand, in E2 and E1 in both of which the composite oxide NMA containing no Co was used as the positive electrode active material, A1 and FEC were added to the nonaqueous electrolyte in E2, and A1 was added but FEC was not added to the nonaqueous electrolyte in E1. In E2, relative to E1, the amount of gas generated during high-temperature storage increased by only 1.9 mL (24.5 mL -> 26.4 mL), showing that the gas generation due to FEC was significantly suppressed when FEC was added together with A1.

In E3 to E4 in which A2 was contained in the nonaqueous electrolyte, too, the MR increased considerably, and the ΔDCIR decreased remarkably.

In C5 to C7, since B1 to B3 were contained as the first component in the nonaqueous electrolyte, the MR was low, and the ΔDCIR was high. Here, in B1, R³ in the general formula (1) is a methyl group. In B2, R³ in the general formula (1) is a vinyl group. In B3, R¹ and R² in the general formula (1) are 2,2,2-trifluoroethyl group, and R³ is a methyl group.

### [Industrial Applicability]

The nonaqueous electrolyte secondary battery according to the present disclosure is useful as a main power source for mobile communication devices, portable electronic devices, and the like. Furthermore, the nonaqueous electrolyte secondary battery has a high capacity while being excellent in cycle characteristics, and is suitably applicable also for in-vehicle use. The application of the nonaqueous electrolyte secondary battery, however, is not limited to these.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

1: electrode group, 2: positive electrode lead, 3: negative electrode lead, 4: battery case, 5: sealing plate, 6: negative electrode terminal, 7: gasket, 8: sealing plug

## Claims

1. A nonaqueous electrolyte secondary battery, comprising:
a positive electrode; a negative electrode; and a nonaqueous electrolyte, wherein
the positive electrode includes a positive electrode active material,
the positive electrode active material includes a lithium-transition metal composite oxide containing Ni, Mn, and Al,
proportions of Ni, Mn, and Al in metal elements other than Li contained in the lithium-transition metal composite oxide are, respectively,
Ni: 50 atm% or more,
Mn: 10 atm% or less, and
Al: 10 atm% or less,
when the lithium-transition metal composite oxide contains Co, a proportion of Co in the metal elements other than Li is 1.5 atm% or less, and
the nonaqueous electrolyte includes an organophosphorus compound represented by a general formula (1): 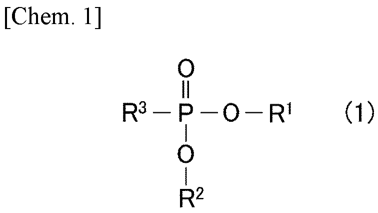 where in the general formula (1),
R¹ and R² are each independently an alkyl group with 1 to 4 carbon atoms, and
R³ is a fluorinated alkyl group with 1 to 4 carbon atoms.

2. The nonaqueous electrolyte secondary battery according to claim 1, wherein the organophosphorus compound includes at least one selected from the group consisting of diethyl(fluoromethyl)phosphonate, diethyl(difluoromethyl)phosphonate, and diethyl(trifluoromethyl)phosphonate.

3. The nonaqueous electrolyte secondary battery according to claim 1 or 2, wherein a content of the organophosphorus compound in the nonaqueous electrolyte is 2 mass% or less.

4. The nonaqueous electrolyte secondary battery according to any one of claims 1 to 3, further comprising a fluorinated cyclic carbonate.

5. The nonaqueous electrolyte secondary battery according to claim 4, wherein the fluorinated cyclic carbonate includes fluoroethylene carbonate.

6. The nonaqueous electrolyte secondary battery according to any one of claims 1 to 5,
wherein
the lithium-transition metal composite oxide is represented by a following formula:
Li_{α}Ni_{(1-x1-x2-y-z)}Coₓ₁Mnₓ₂Al_{y}M_{z}O_{2+β}
where
0.95 ≤ α ≤ 1.05,
0.685 ≤ 1-x1-x2-y-z ≤ 0.95,
0 ≤ x1 ≤ 0.015,
0 < x2 ≤ 0.1,
0 < y ≤ 0.1,
0 ≤ z ≤ 0.1, and
-0.05 ≤ β ≤ 0.05 are satisfied, and
M is an element other than Li, Ni, Mn, Al, Co, and oxygen.

7. The nonaqueous electrolyte secondary battery according to claim 6, wherein the element M is at least one selected from the group consisting of Ti, Zr, Nb, Mo, W, Fe, Zn, B, Si, Mg, Ca, Sr, Sc, and Y
